(19) Europäisches Patentamt
European Patent Office
Office européen des brevets

(11) **EP 2 466 733 A2**

(12) **EUROPEAN PATENT APPLICATION**

(43) Date of publication:
   **20.06.2012 Bulletin 2012/25**

(51) Int Cl.:
   **H02K 21/04** *(2006.01)*

(21) Application number: **11192736.4**

(22) Date of filing: **09.12.2011**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(30) Priority: **17.12.2010 JP 2010281906**

(71) Applicant: **Samsung Electronics Co., Ltd.
   Suwon-si, Gyeonggi-do 506-762 (KR)**

(72) Inventor: **Kenji, Kitajima
   Yokohama 230-0027 (KR)**

(74) Representative: **Grünecker, Kinkeldey,
   Stockmair & Schwanhäusser
   Leopoldstrasse 4
   80802 München (DE)**

(54) **Synchronous motor**

(57)   A synchronous motor which causes decrease in iron loss without increase in copper loss due to increase in q-axis current, and increases efficiency. The synchronous motor includes a rotor, the number of magnetic poles of which is changeable. The magnetic poles of the rotor include permanent magnets and electromagnets having changeable polarity, and the number of the magnetic poles of the rotor is changed by changing a current flow direction of the electromagnets.

FIG. 1

IN CASE OF 6 POLES

IN CASE OF 42 POLES

## Description

BACKGROUND

1. Field

Embodiments of the present disclosure relate to improvement in efficiency of a synchronous motor.

2. Description of the Related Art

From among conventional synchronous motors, there is a synchronous motor in which a magnetization amount of magnets is adjusted according to a driving load so as to improve efficiency, as disclosed in Japanese Patent Application No. 2008-211690. For example, in a method of weakening magnetic flux through field weakening control during high-speed rotation, iron loss is decreased without harmonic iron loss. Further, since d-axis current does not flow, efficiency improves while copper loss does not increase.

However, since an intensity of magnetic flux of the magnets decreases, torque is lowered. In order to supplement the lowered torque, q-axis current is generally increased. Consequently, copper loss is increased and effective improvement in efficiency is not achieved.

Further, in the increasing and decreasing method of the magnetization amount of magnets, demagnetization and magnetization are carried out in a motor and thus it is assumed that a load region of the motor is a region which is not demagnetized. Therefore, a required output region is restricted to a motor drive region which is not demagnetized.

SUMMARY

Therefore, it is an aspect of the present disclosure to provide a synchronous motor which causes decrease in iron loss without increase in copper loss due to increase in q-axis current, and increases efficiency.

Additional aspects of the disclosure will be set forth in part in the description which follows and, in part, will be apparent from the description, or may be learned by practice of the disclosure.

In accordance with one aspect of the present disclosure, a synchronous motor includes a rotor, the number of magnetic poles of which is changeable.

$$\text{Iron loss} = Kh \times B1.6 \times f + Ke \times B2 \times f2$$

Here, Kh is a hysteresis loss coefficient, Ke is an eddy current loss coefficient, B is magnetic flux density, and f is a drive frequency.

Thereby, the synchronous motor enables iron loss to be reduced due to lowering of a drive frequency caused by change of the number of poles, as compared to the conventional method which improves efficiency due to reduction of iron loss caused by increase and decrease of a magnetization amount of magnets, and does not increase and decrease a magnetization amount of magnets, as compared to the conventional method, thus not causing increase of copper loss due to increase of q-axis current and effectively reducing iron loss. Further, since the conventional method carries out demagnetization and magnetization in a motor, an output region of the motor is restricted to a region which is not demagnetized.

The magnetic poles of the rotor may include permanent magnets and electromagnets having changeable polarity, and the number of the magnetic poles of the rotor may be changed by changing a current flow direction of the electromagnets.

The permanent magnets and the electromagnets may be alternately provided on the rotor in the circumferential direction.

An intensity of magnetic flux of the magnetic poles may be adjusted by controlling current flowing along the electromagnets.

Further, the magnetic poles of the rotor may include fixed permanent magnets fixed to the rotor, movable permanent magnets, each of which includes an N pole and an S pole, movable in the axial direction of the rotor, and an actuator to slidably move the movable permanent magnets relative to the rotor in the axial direction, and the number of the magnetic poles of the rotor may be changed by causing the actuator to slidably move the movable permanent magnets in the axial direction.

The fixed permanent magnets and the movable permanent magnets may be alternately provided on the rotor in the circumferential direction.

An intensity of magnetic flux of the magnetic poles may be adjusted by controlling an amount of sliding movement of the movable permanent magnets by the actuator.

BRIEF DESCRIPTION OF THE DRAWINGS

These and/or other aspects of the disclosure will become apparent and more readily appreciated from the following description of the embodiments, taken in conjunction with the accompanying drawings of which:

FIG. 1 is a schematic view illustrating a configuration (1/3 model) of a synchronous motor in accordance with a first embodiment of the present disclosure;

FIG. 2 is a view illustrating change of the number of poles of the synchronous motor in accordance with the first embodiment of the present disclosure;

FIG. 3 is a view illustrating structures of electromagnets in accordance with the first embodiment of the present disclosure;

FIG. 4 is a view illustrating iron loss density if a rotor has a 6 pole structure and a 42 pole structure at 1,200rpm of the synchronous motor;

FIG. 5 is a view illustrating efficiency if a conventional motor is applied to a washing machine and efficiency if the motor in accordance with the first embodiment of the present disclosure is applied to a washing machine;

FIG. 6 is a schematic view illustrating a configuration (1/3 model) of a synchronous motor in accordance with a second embodiment of the present disclosure;

FIG. 7 is a view illustrating grouping in accordance with the second embodiment of the present disclosure;

FIG. 8 is a view illustrating change of the number of poles of the synchronous motor in accordance with the second embodiment of the present disclosure; and

FIG. 9 is a view illustrating a supporter unit and an actuator in accordance with the second embodiment of the present disclosure.

DETAILED DESCRIPTION

Reference will now be made in detail to embodiments of the present disclosure, examples of which are illustrated in the accompanying drawings, wherein like reference numerals refer to like elements throughout.

<First embodiment>

Hereinafter, a first embodiment of the present disclosure will be described with reference to the accompanying drawings.

For example, a synchronous motor 100 in accordance with this embodiment is a three-phase brushless DC motor for washing machines in an outer rotor-type in which a rotor 3 is rotated around the circumference of a stator 2.

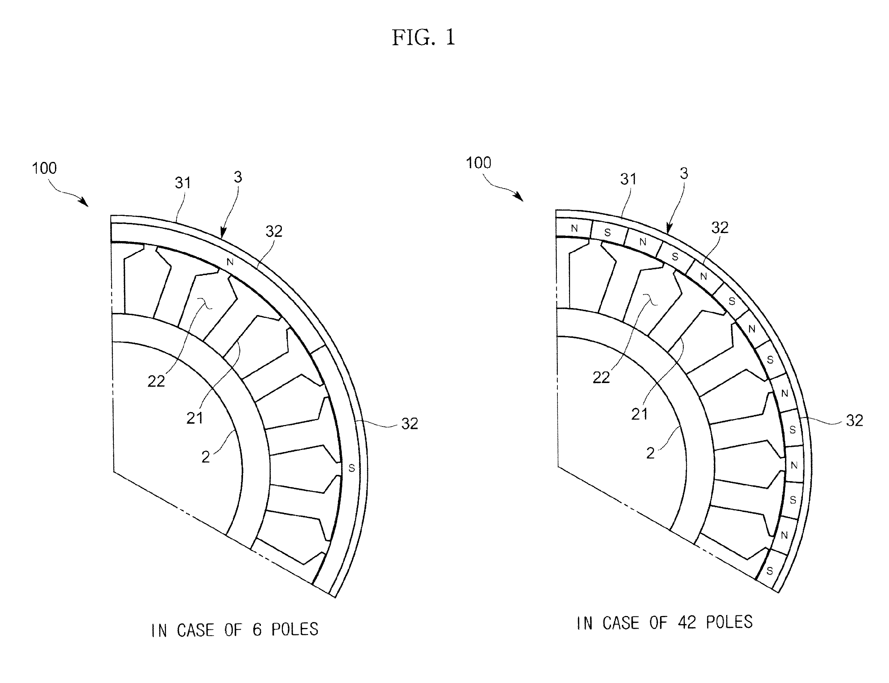

In more detail, as shown in FIG. 1, the synchronous motor 100 includes the stator 2 including a plurality of magnetic poles 21 and a plurality of slots 22 formed between the magnetic poles 21, the rotor 3 disposed opposite the outer circumferential surface of the stator 2 and including a plurality of magnets 32 provided on the surface of the rotor 3, and three-phase exciting coils (not shown) wound on the respective magnetic poles 21 of the stator 2.

The stator 2 is a magnetic body having an approximately cylindrical or columnar shape, and includes the plural magnetic poles 21 extended in the axial direction and arranged at approximately the same interval on the outer circumferential surface of the stator 2 in the circumferential direction. The magnetic poles 21 are protruded from the outer circumferential surface of the stator 2 in the centrifugal direction, and have an approximately T-shaped cross section in which the width of the front end of each magnetic pole 21 facing the magnet 32 is enlarged.

The rotor 3 has an approximately cylindrical shape provided with the inner circumferential surface separated from the front ends of the magnetic poles 21 of the stator 2 by a designated gap. The rotor 3 is disposed to be coaxial with the stator 2 and is rotated around the circumference of the stator 2. The rotor 3 includes a rotor main body 31 having an approximately cylindrical shape and formed of a nonmagnetic material, a plurality of permanent magnets 321 extended in the axial direction and arranged at approximately the same interval along the inner circumferential surface of the rotor main body 31 in the circumferential direction, and a plurality of electromagnets 322, polarity of which is changeable.

Although this will be described later in more detail, the plural permanent magnets 321 and the plural electromagnets 322 are alternately provided on the rotor main body 31 in the circumferential direction. The rotor 3 is configured such that the number of poles is changeable by changing a current flow direction of the electromagnets 322.

Distributed winding of the exciting coils on the poles 21 of the stator 2 is carried out. Further, concentrated winding of the exciting coils on the respective poles 21 of the stator 2 may be carried out.

Hereinafter, as one example of distributed winding of the exciting coils, the synchronous motor 100 in which the stator 2 includes 18 slots 22 and the number of the poles of the rotor 3 is changeable between 6 and 42 will be exemplarily described.

The number of the poles of the rotor 3 and the rpm of the synchronous motor 100 satisfies the expression below.

$$N = (f/p) \times 30$$

Here, N represents rpm, f represents a drive frequency, and p represents the number of pole pairs (=the number of the poles/2).

That is, on the assumption that the rpm of the synchronous motor 100 is 1200rpm, relations between the respective numbers of the poles and the respective drive frequencies are as follows.

Number of poles: 42 Drive frequency: 420 Hz

Number of poles: 6 Drive frequency: 60 Hz

It is understood that drive frequencies are different according to the numbers of the poles at the same rpm.

Further, as one example of concentrated winding of the exciting coils, the synchronous motor 100 in which the stator 2 includes 12 slots 22 and the number of the poles of the rotor 3 is changeable between 8 and 32 may be provided. In this case, relations between the respective numbers of the poles and the respective drive frequencies of the synchronous motor 100 are as follows. Further, it is assumed that the rpm of the synchronous motor 100 is 1200rpm.

Number of poles: 32 Drive frequency: 320 Hz

Number of poles: 8 Drive frequency: 80 Hz

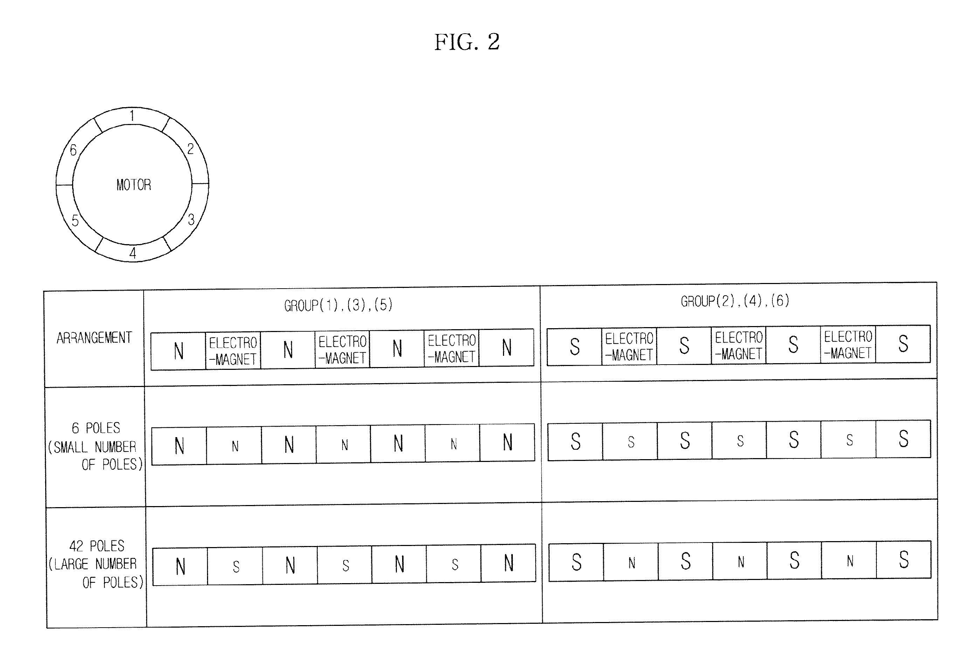

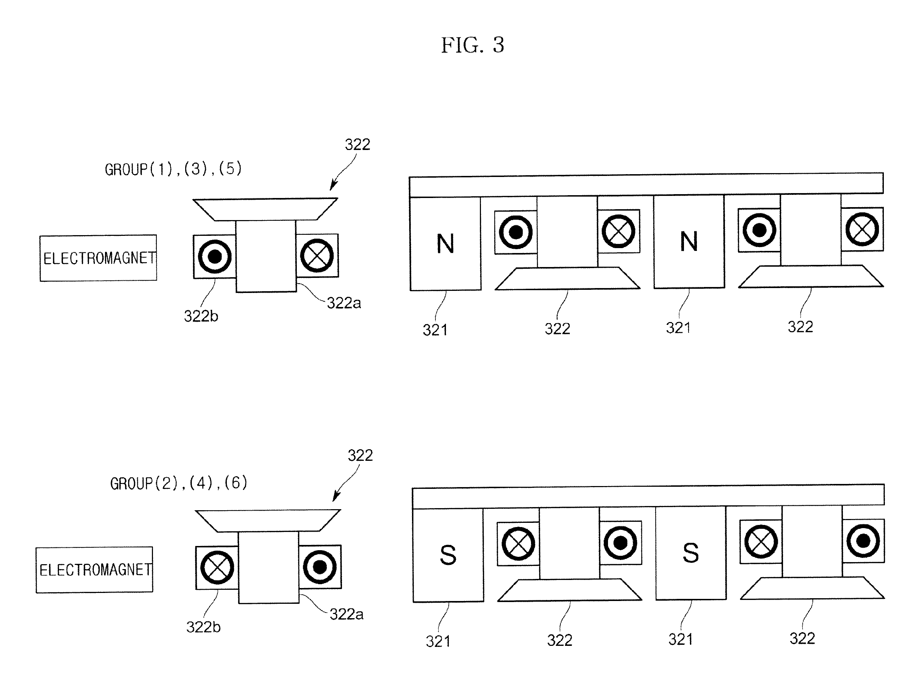

Further, the rotor 3 in accordance with this embodiment of the present disclosure is divided into groups (1)~(6), as shown in FIGS. 2 and 3, and each of the groups (1)~(6) includes permanent magnets 321 and electromagnets 322, polarity of which is freely changeable, so as to form 7 poles.

Each of the groups (1), (3) and (5) includes 4 permanent magnets 321 having N polarity and fixed to the rotator main body 31 in the circumferential direction, and 3 electromagnets 322 respectively disposed between the permanent magnets 321 and having changeable polarity.

Each of the groups (2), (4) and (6) includes 4 permanent magnets 321 having S polarity and fixed to the rotator main body 31 in the circumferential direction, and 3 electromagnets 322 respectively disposed between the permanent magnets 321 and having changeable polarity.

Each of the electromagnets 322 of the respective groups (1)~(6) includes a tooth 322a protruded outward from the circumferential surface of the rotor main body 31 between the permanent magnets 322b, and a coil 322b wound on the tooth 322a. As shown in FIG. 3, a winding direction of the coils 322b on the electromagnets 322 of the groups (1), (3) and (5) and a winding direction of the coils 322b on the electromagnets 322 of the groups (2), (4) and (6) are different. Thereby, when current is supplied to the electromagnets 322, the electromagnets 322 of the groups (1), (3) and (5) and the electromagnets 322 of the groups (2), (4) and (6) exhibit different polarities. Further, current supply to the coils 322b is carried out by controlling a power supply device via a control device.

If the above-described rotor 3 has a 6 pole structure, the electromagnets 322 exhibit the same polarity (N polarity) as the polarity (N polarity) of the electromagnets 321 in the groups (1), (3) and (5) (with reference to FIG. 2). Further, the electromagnets 322 exhibit the same polarity (S polarity) as the polarity (S polarity) of the electromagnets 321 in the groups (2), (4) and (6) (with reference to FIG. 2). Thereby, the group (1) and the group (2) form 1 pole pair, and consequently the rotor 3 has 6 poles.

If the above-described rotor 3 has a 42 pole structure, the electromagnets 322 exhibit the opposite polarity (S polarity) to the polarity (N polarity) of the electromagnets 321 in the groups (1), (3) and (5) (with reference to FIG. 2). Further, the electromagnets 322 exhibit the opposite polarity (N polarity) to the polarity (S polarity) of the electromagnets 321 in the groups (2), (4) and (6) (with reference to FIG. 2). Thereby, the group (1) and the group (2) form 7 pole pairs, and consequently the rotor 3 has 42 poles.

Further, power is supplied to the electromagnets 322 using a slip ring or an induced sudden charging system. This method may randomly control an intensity of the electromagnets 322 in addition to changing the number of poles, thereby weakening an intensity of magnetic flux of the poles and thus suppressing induced voltage.

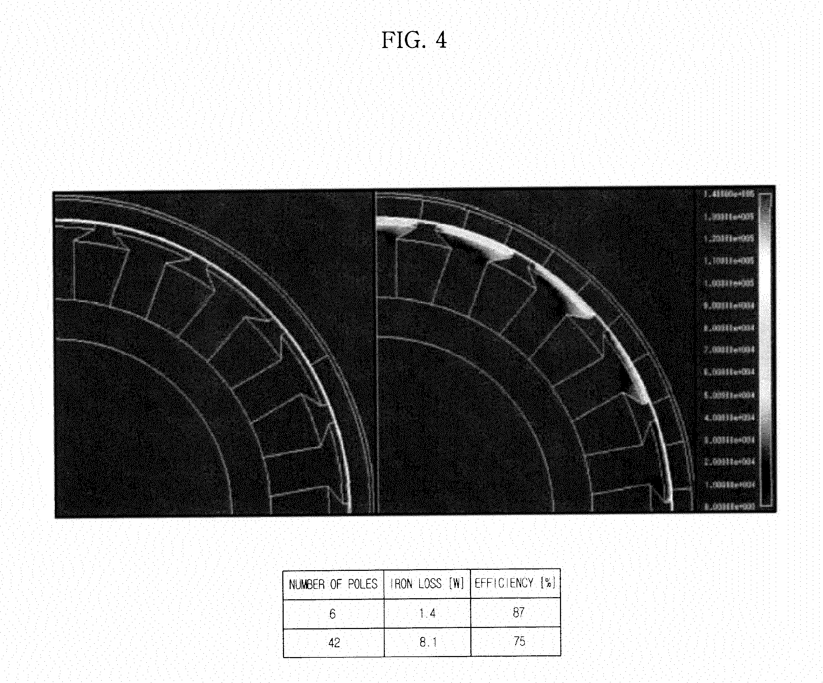

Here, FIG. 4 is a view illustrating iron loss and efficiency if the rotor has a 6 pole structure and a 42 pole structure as a result of a simulation of iron loss density if the rotor has the 6 pole structure and the 42 pole structure at 1,200rpm of the synchronous motor. From the result of the simulation, it is understood that the iron loss is drastically reduced and efficiency of the motor 100 is improved by changing the number of the poles of the rotor from 42 to 6.

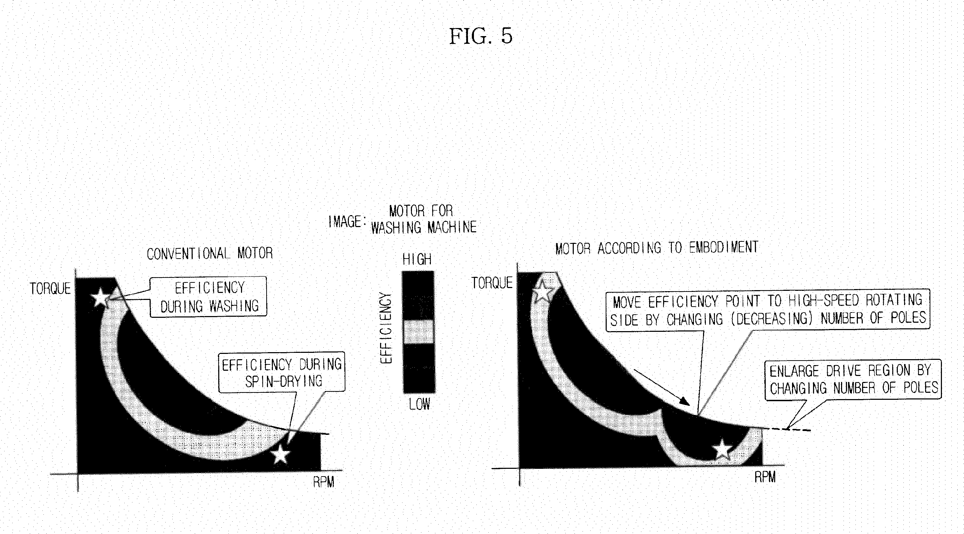

Further, if the motor 100 in accordance with this embodiment is applied to a washing machine, both efficiency of the washing machine during washing and efficiency of the washing machine during spin-drying may be improved, as shown in FIG. 5. The efficiency of the washing machine during spin-drying may be improved by moving a high-efficiency point to a high-speed rotating side by changing (decreasing) the number of the poles of the rotor of the motor 10 during a transition stage from the washing cycle and the spin-drying cycle of the washing machine.

<Effects of first embodiment>

The above-described synchronous motor 100 in accordance with this embodiment enables iron loss to be reduced due to lowering of a drive frequency caused by change of the number of poles, as compared to the conventional method which improves efficiency due to reduction of iron loss caused by increase and decrease of a magnetization amount of magnets, and does not increase and decrease a magnetization amount of magnets, as compared to the conventional method, thus not causing increase of copper loss due to increase of q-axis current and effectively reducing iron loss. Further, since the conventional method which increases and decreases the magnetization amount of magnets carries out demagnetization and magnetization in a motor and thus it is assumed that a load region of the motor is a region which is not demagnetized, a required output region is restricted to a motor drive region which is not demagnetized.

<Second embodiment>

Next, a second embodiment of the present disclosure will be described with reference to the accompanying drawings.

For example, a synchronous motor 100 in accordance with this embodiment is an inner rotor-type motor differently from the first embodiment. Some parts in this embodiment which are substantially the same as those in the first embodiment are denoted by the same reference numerals even though they are depicted in different drawings.

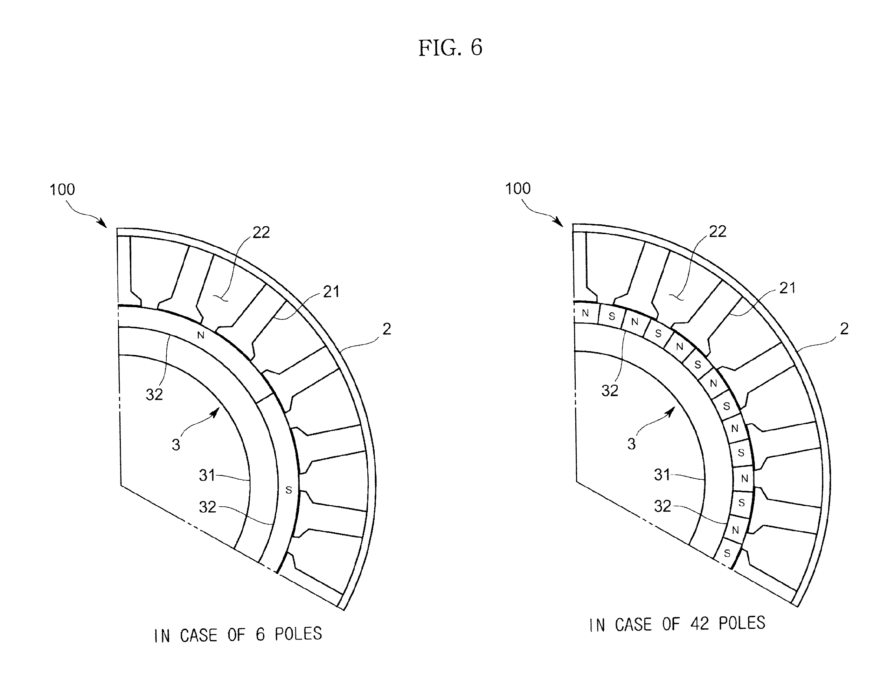

In more detail, as shown in FIG. 6, the synchronous motor 100 includes the stator 2 including a plurality of magnetic poles 21 and a plurality of slots 22 formed between the magnetic poles 21, the rotor 3 disposed opposite the inner circumferential surface of the stator 2 and including a plurality of magnets 32 provided on the surface of the rotor 3, and three-phase coils wound on the respective magnetic poles 21 of the stator 2.

The stator 2 is a magnetic body having an approximately cylindrical shape, and includes the plural magnetic poles 21 extended in the axial direction and arranged at approximately the same interval on the inner circumferential surface of the stator 2 in the circumferential direction. The magnetic poles 21 are protruded from the inner circumferential surface of the stator 2 in the centripetal direction, and have an approximately T-shaped cross section in which the width of the front end of each magnetic pole 21 facing the magnet 32 is enlarged.

The rotor 3 has an approximately cylindrical shape provided with the outer circumferential surface separated from the front ends of the magnetic poles 21 of the stator 2 by a designated gap. The rotor 3 is disposed to be coaxial with the stator 2 and is rotated within the stator 2. The rotor 3 includes a rotor main body 31 having an approximately cylindrical shape and formed of a nonmagnetic material, a plurality of fixed permanent magnets 321 extended in the axial direction and arranged at approximately the same interval along the outer circumferential surface of the rotor main body 31 in the circumferential direction, a plurality of movable permanent magnets 323, each of which includes an N pole and an S pole, movable in the axial direction of the rotor 3, and an actuator 324 to move the movable permanent magnets 323 relative to the rotor main body 31 in the axial direction.

Although this will be described later in more detail, the plural permanent magnets 321 and the plural movable permanent magnets 323 are alternately provided on the rotor main body 31 in the circumferential direction. The movable permanent magnet 323 includes the S pole at one end thereof in the axial direction and the N pole at the other end thereof in the axial direction. The rotor 3 is configured such that the number of poles is changeable by changing a sliding position of the movable permanent magnets 323. Further, a rotary shaft is provided to be coaxial with the rotor main body 31.

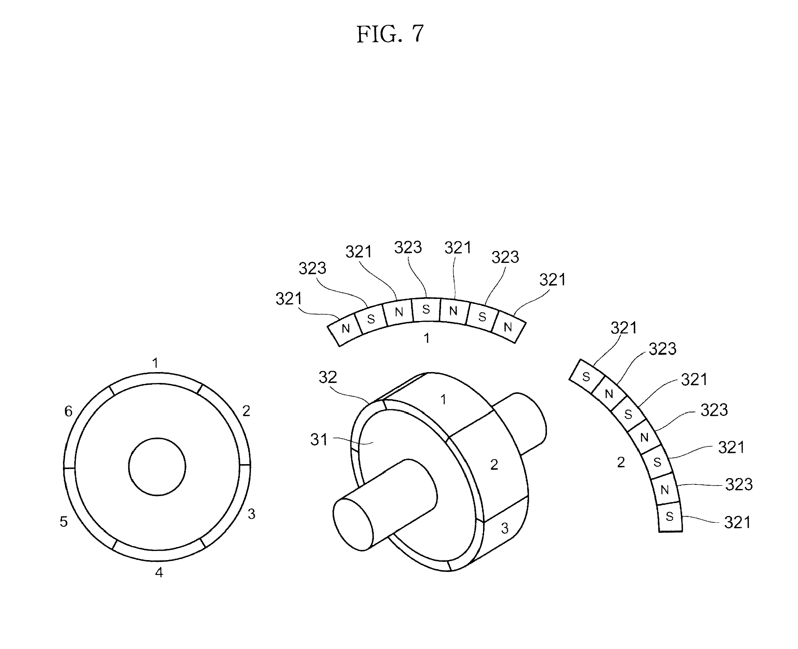

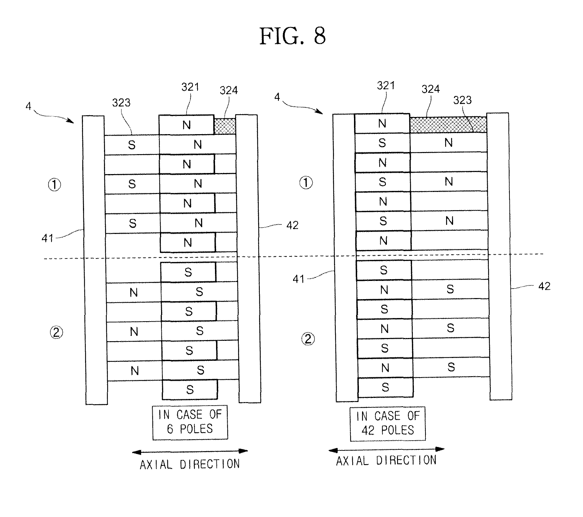

Further, the rotor 3 in accordance with this embodiment of the present disclosure is divided into groups (1)~(6), as shown in FIGS. 7 and 8, and each of the groups (1)~(6) includes fixed permanent magnets 321 and movable permanent magnets 323 so as to form 7 poles.

Each of the groups (1), (3) and (5) includes 4 fixed permanent magnets 321 having N polarity and fixed to the rotator main body 31 in the circumferential direction, and 3 movable permanent magnets 323 respectively disposed between the fixed permanent magnets 321, as shown in FIG. 8.

Each of the groups (2), (4) and (6) includes 4 fixed permanent magnets 321 having S polarity and fixed to the rotator main body 31 in the circumferential direction, and 3 movable permanent magnets 323 respectively disposed between the fixed permanent magnets 321, as shown in FIG. 8.

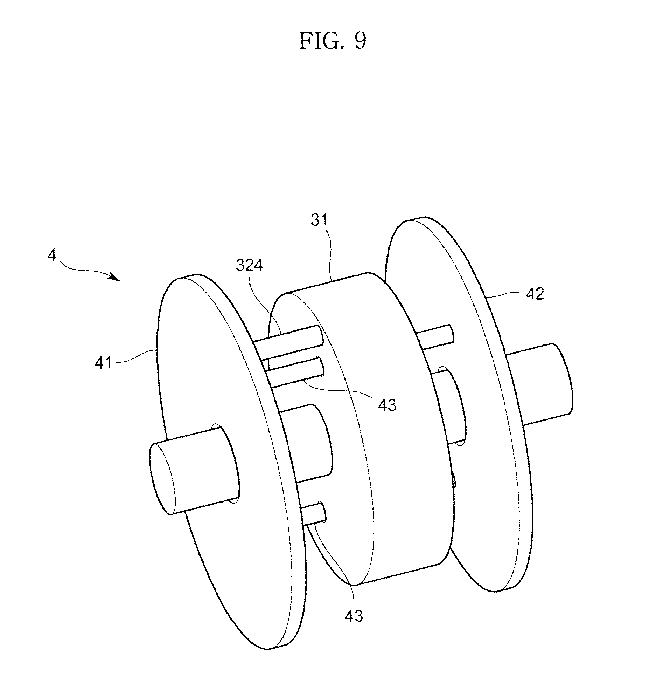

The plural movable permanent magnets 323 of the respective groups (1)~(6) are supported by a common supporter unit 3, and the actuator 324 to slidably move the supporter unit 4 relative to the rotor main body 31 is provided between the supporter unit 4 and the rotor main body 31, as shown in FIGS. 8 and 9. The supporter unit 4, as shown in FIG. 9, includes a first supporter 41 having an approximately ring shape with a through hole to pass the shaft and provided at one side of the rotor main body 31, a second supporter 42 having an approximately ring shape with a through hole to pass the shaft and provided at the other side of the rotor main body 31, and connectors 43 connecting the first supporter 41 and the second supporter 42.

As shown in FIG. 8, the S poles of the movable permanent magnets 323 of the groups (1), (3) and (5) and the N poles of the movable permanent magnets 323 of the groups (2), (4) and (6) are connected to the first supporter 41, and the N poles of the movable permanent magnets 323 of the groups (1), (3) and (5) and the S poles of the movable permanent magnets 323 of the groups (2), (4) and (6) are connected to the second supporter 42. Further, the connectors 43 are slidably inserted into guide holes formed through the rotor main body 31. The actuator 324 is provided between the second supporter 42 and the rotor main body 31

The actuator 324 serves to slidably move the supporter unit 4 (the movable permanent magnets 323 supported by the supporter unit 4) relative to the rotor main body 31, and, for example, an actuator which is electromagnetically expanded and contracted, such as a solenoid, or an actuator which is thermally expanded and contracted, such as a spring formed of a shape memory alloy, may be used as the actuator 324. Here, a resin which easily slides is interposed between the fixed permanent magnets 321 and the rotor main body 31 and between the fixed permanent magnets 321 and the movable permanent magnets 323, thereby reducing driving force (thrust force) of the actuator 324.

If the above-described rotor 3 has a 6 pole structure, since the actuator 324 is contracted and the second supporter 42 moves toward the rotor main body 31, the N poles of the movable permanent magnets 323 are located between the fixed permanent magnets 321 (exhibiting N polarity) in the groups (1), (3) and (5) (with reference to FIG. 8). Further, the S poles of the movable permanent magnets 323 are located between the fixed permanent magnets 321 (exhibiting S polarity) in the groups (2), (4) and (6) (with reference to FIG. 8). Thereby, the group (1) and the group (2) form 1 pole pair, and consequently the rotor 3 has 6 poles.

If the above-described rotor 3 has a 42 pole structure, since the actuator 324 is expanded and the first supporter 41 moves toward the rotor main body 31, the S poles of the movable permanent magnets 323 are located between the fixed permanent magnets 321 (exhibiting N polarity) in the groups (1), (3) and (5) (with reference to FIG. 8). Further, the N poles of the movable permanent magnets 323 are located between the fixed permanent magnets 321 (exhibiting S polarity) in the groups (2), (4) and (6) (with reference to FIG. 8). Thereby, the group (1) and the group (2) form 7 pole pairs, and consequently the rotor 3 has 42 poles.

Further, power is supplied to the electromagnetic actuator 324 using a slip ring. This method may randomly control an amount of sliding movement of the movable permanent magnets 323 in addition to changing the number of poles, thereby weakening an intensity of magnetic flux of the poles and thus suppressing induced voltage.

Moreover, if a spring formed of a shape memory alloy which is thermally expanded and contracted is used as the actuator 324, for example, if the motor 100 is applied to a washing machine, the spring is expanded by heat generated from the exciting coils of the stator 2 to form 42 poles and thus torque is generated, during washing operation requiring large torque. Further, during spin-drying operation requiring small torque and high-speed rotation, the spring is contracted by air cooling to form 6 poles and thus a drive frequency is lowered, thereby suppressing iron loss.

<Effects of second embodiment>

In the same manner as the first embodiment, the above-described synchronous motor 100 in accordance with this embodiment enables iron loss to be reduced due to lowering of a drive frequency caused by change of the number of poles, as compared to the conventional method which improves efficiency due to reduction of iron loss caused by increase and decrease of a magnetization amount of magnets, and does not increase and decrease a magnetization amount of magnets, as compared to the conventional method, thus not causing increase of copper loss due to increase of q-axis current and effectively reducing iron loss.

<Other modified embodiments>

Further, the embodiments of the present disclosure are not limited to the above description. For example, although the first embodiment illustrates the outer rotor-type motor, an inner rotor-type motor may be provided, and although the second embodiment illustrates the inner rotor-type motor, an outer rotor-type motor may be provided.

As is apparent from the above description, a synchronous motor in accordance with one embodiment of the present disclosure causes decrease in iron loss without increase in copper loss due to increase in q-axis current, and increases efficiency.

Although a few embodiments of the present disclosure have been shown and described, it would be appreciated by those skilled in the art that changes may be made in these embodiments without departing from the principles and spirit of the invention, the scope of which is defined in the claims and their equivalents.

**Claims**

1. A synchronous motor comprising a rotor, the number of magnetic poles of which is changeable.

2. The synchronous motor according to claim 1, wherein:

   the magnetic poles of the rotor include permanent magnets and electromagnets having changeable polarity; and
   the number of the magnetic poles of the rotor is changed by changing a current flow direction of the electromagnets.

3. The synchronous motor according to claim 2, wherein the permanent magnets and the electromagnets are alternately provided on the rotor in the circumferential direction.

4. The synchronous motor according to claim 2, wherein an intensity of magnetic flux of the magnetic poles is adjusted by controlling current flowing along the electromagnets.

5. The synchronous motor according to claim 3, wherein an intensity of magnetic flux of the magnetic poles is adjusted by controlling current flowing along the electromagnets.

6. The synchronous motor according to claim 1, wherein:

   the magnetic poles of the rotor include fixed permanent magnets fixed to the rotor, movable permanent magnets, each of which includes an N pole and an S pole, movable in the axial direction of the rotor, and an actuator to slidably move the movable permanent magnets relative to the rotor in the axial direction; and

the number of the magnetic poles of the rotor is changed by causing the actuator to slidably move the movable permanent magnets in the axial direction.

7. The synchronous motor according to claim 6, wherein the fixed permanent magnets and the movable permanent magnets are alternately provided on the rotor in the circumferential direction.

8. The synchronous motor according to claim 6, wherein an intensity of magnetic flux of the magnetic poles is adjusted by controlling an amount of sliding movement of the movable permanent magnets by the actuator.

9. The synchronous motor according to claim 7, wherein an intensity of magnetic flux of the magnetic poles is adjusted by controlling an amount of sliding movement of the movable permanent magnets by the actuator.

FIG. 1

IN CASE OF 6 POLES

IN CASE OF 42 POLES

FIG. 2

EP 2 466 733 A2

| ARRANGEMENT | GROUP(1),(3),(5) | | | | | | | GROUP(2),(4),(6) | | | | | | |
|---|---|---|---|---|---|---|---|---|---|---|---|---|---|---|
| | N | ELECTRO-MAGNET | N | ELECTRO-MAGNET | N | ELECTRO-MAGNET | N | S | ELECTRO-MAGNET | S | ELECTRO-MAGNET | S | ELECTRO-MAGNET | S |
| 6 POLES (SMALL NUMBER OF POLES) | N | N | N | N | N | N | N | S | S | S | S | S | S | S |
| 42 POLES (LARGE NUMBER OF POLES) | N | S | N | S | N | S | N | S | N | S | N | S | N | S |

FIG. 3

FIG. 4

| NUMBER OF POLES | IRON LOSS [W] | EFFICIENCY [%] |
|---|---|---|
| 6 | 1.4 | 87 |
| 42 | 8.1 | 75 |

FIG. 5

FIG. 6

IN CASE OF 6 POLES

IN CASE OF 42 POLES

EP 2 466 733 A2

FIG. 7

FIG. 8

IN CASE OF
6 POLES

IN CASE OF
42 POLES

AXIAL DIRECTION

AXIAL DIRECTION

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008211690 A